# EUROPÄISCHE PATENTSCHRIFT

(11) **EP 0 543 350 B1**
(45) Veröffentlichungstag und Bekanntmachung des Hinweises auf die Patenterteilung: **20.09.1995**
(21) Anmeldenummer: 92119642.4
(22) Anmeldetag: 17.11.1992
(51) Int. Cl.: H02G 15/013, H02G 15/113

(54) **Kabelmuffe aus einem längsgeteilten Gehäuse**
Cable sleeve comprising a longitudinally divided housing
Manchon de câble comprenant un boîtier divisé longitudinalement

(30) Priorität: 22.11.1991 DE 4138462
(43) Veröffentlichungstag der Anmeldung: 26.05.1993
(73) Patentinhaber: RXS Schrumpftechnik-Garnituren GmbH, D-58093 Hagen (DE)
(72) Erfinder: Meltsch, Hans-Jürgen, W-5840 Schwerte 4 (DE); Gräfe, Detlef, W-5800 Hagen 7 (DE); Klostermeyer, Hermann, W-5800 Hagen 1 (DE)
(74) Vertreter: Fuchs, Franz-Josef, Dr.-Ing.

(56) Entgegenhaltungen:
- EP-A- 0 248 181
- DE-A- 2 515 939
- DE-C- 941 734
- FR-A- 2 648 630
- GB-A- 1 060 255
- US-A- 4 743 209

## Beschreibung

Die Erfindung betrifft eine Kabelmuffe aus einem längsgeteilten Gehäuse mit einem Dichtungssystem in der Gehäusetrennebene und mit stirnseitigen Kabeleinführungsbereichen in den stirnseitigen Abschlüssen der Kabelmuffenschalen, wobei eine weitere, von der Gehäusetrennebene unabhängige Einführungstrennebene in den Kabeleinführungsbereichen vorgesehen ist, in der die Kabeleinführungsöffnungen eingebracht sind und ein angepaßter mit dem oberen Rand der unteren Kabelmuffenschalen, in der Gehäusetrennebene abschließenden Dichtungskörper auf der Einführungstrennebene eingesetzt ist.

Aus der deutschen Patentschrift 25 15 939 ist eine Kabelmuffe bekannt, die aus Halbschalen besteht und bei der die Kabeleinführungen in der Trennebene des Muffengehäuses liegen. Bei einer solchen Muffenform müssen die Kabeleinführungsöffnungen nach einem Wiederöffnen der Muffe völlig erneuert werden.

Aus der britischen Patentschrift GB-A- 1 060 255 ist eine Kabelmuffe bekannt, die aus einem längsgeteilten Gehäuse mit Kabeleinführungssbereichen in den stirnseitigen Abschlüssen besteht. Die Kabeleinführungen werden mit Hilfe von vorgefertigten Einsätzen vorgenommen, die in Führungen der Kabelmuffenstirnseiten eingeschoben werden.

In der französischen Patentschrift FR-A- 2 648 630 wird weiterhin eine Kabelmuffe beschrieben, die eine Trennebene aufweist von der ausgehend Kabeleinführungsöffnungen angeordnet sind. Beim Öffnen der Kabelmuffe werden alle Kabeleinführungsöffnungen betroffen.

Der vorliegenden Erfindung liegt nun die Aufgabe zugrunde, eine Kabelmuffe mit Längsteilung zu schaffen, bei der die Kabeleinführungsbereiche bei nachträglichem Öffnen unberührt bleiben können. Die gestellte Aufgabe wird gemäß der Erfindung mit einer Kabelmuffe der eingangs erläuterten Art dadurch gelöst, daß Dichtungskammern zur Aufnahme eines Dichtungsblockes aus elastischem oder plastischem Dichtungsmaterial in den Kabeleinführungsbereichen angeordnet sind, wobei jeweils der Dichtungsblock Kabeleinführungsöffnungen aufweist und daß die Durchmesser der Kabeleinführungsöffnungen in den Wandungen der Kabelmuffenschalen größer sind als die Durchmesser der Kabeleinführungsöffnungen im Dichtungsblock.

Bei den bisher üblichen Halbschalenmuffen liegt die Trennebene der Halbschalen zugleich in der Trennebene der einzuführenden Kabel, so daß beim Öffnen der Kabelmuffe auch die Dichtungen in den Kabeleinführungsbereichen betroffen sind. Dabei werden beim Öffnen der Kabelmuffe zum Zwecke der Änderung der Beschaltung, der Fehlersuche oder der Reparatur von Spleißverbindungen auch die Einführungsbereiche der Kabel mit geöffnet. Das führt sehr häufig zu irreversiblen Schäden an der Kabeldichtung, so daß die Kabelmuffe nach dem Wiederschließen in diesen Bereichen nicht mehr dicht ist. Die Dichtungen müssen also komplett erneuert werden, was einen großen Aufwand bedeutet.

Bei der Erfindung handelt es sich jedoch um eine Kabelmuffe mit separatem Dichtbereich für die Kabeleinführungen, wobei der Einsatz an ungeschnittenen Kabeln auch ohne Verwendung von Schrumpftechnik möglich ist. Diese Lösung sieht eine zweite Trennebene vor, in der die einzuführenden Kabel angeordnet werden. Diese zweite Trennebene wird von einem angepaßten Dichtungskörper mit einer seiner Längsflächen überdeckt, wobei die Höhe des Dichtungskörpers so bemessen ist, daß die der ersten Fläche gegenüber liegende Längsfläche mit den Begrenzungsflächen der Muffenhalbschale die erste Trennebene bilden. Auf diese Weise ist diese Trennebene getrennt von der Kabeleinführungsebene und beim Öffnen der Kabelmuffe kann die Kabeleinführungsebene unberührt bleiben. Die einzuführenden Kabel werden mit plastischem oder elastischem Dichtungsmaterial umwickelt und in die vorgesehenen Mulden bzw. Einführungsöffnungen der zweiten Trennebene in der Kabelmuffe eingelegt. Die Kabeleinführungsöffnungen können sowohl fabriksseitig vorgeformt sein als auch auf der Montagestelle zum Beispiel durch Bohren oder Ausbrechen hergestellt werden. In vorgesehenen Einführungsöffnungen können auch ein- bzw. ausrastbare Dichtungseinsätze vorgesehen werden, die z.B. aus Gummi oder anderem elastischem Material bestehen können. Diese Dichtungseinsätze können auch mittels Kleber oder Dichtungspaste eingesetzt werden, wobei diese entsprechende Einführungsdurchmesser aufweisen. Zwischen der Kabelmuffenschale und dem Dichtungskörper ist ein Dichtungsband einzulegen; doch kann auch ein Dichtungssystem mit nutförmiger Ausbildung und entsprechenden Dichtungseinlagen vorgesehen sein. Der Dichtungskörper wird vorteilhafterweise fest auf die untere Kabelmuffenschale geschraubt oder durch Rastung eventuell unter Zuhilfenahme eines entsprechenden Werkzeuges geklemmt, so daß auf diese Weise die Kabel abgedichtet sind. Dadurch ist der Kabeleinführungsbereich von der Trennebene zwischen den Kabelmuffenschalen getrennt. Der Rand der unteren Kabelmuffenschale und die obere Fläche des Dichtungskörpers bilden dann zum Beispiel eine Ebene als Dichtfläche für den Kabelmuffendeckel bzw. die dazu gehörige Halbschale. Die Dichtung dafür ist vorzugsweise elastisch und kann sich entweder in der Oberschale der Kabelmuffe (Deckel) oder auf der unteren Kabelmuffeneinheit befinden.

Beim späteren Wiederöffnen der Kabelmuffe kann somit der Kabeleinführungsbereich unberührt bleiben und die nach den Schaltarbeiten vorzunehmenden Verschlußmaßnahmen beschränken sich nur auf die einfache Dichtung zwischen den Kabelmuffenschalen. Die elastische Dichtung garantiert ein leichtes Öffnen und Schließen der Kabelmuffe und ist wieder verwendbar. Erst bei Änderungen der Kabelbelegung muß der Dichtungskörper entfernt werden. Die Kabelmuffe eignet sich zum Einsatz an ungeschnittenen Kabeln, da durch die Herausnahme des Dichtungskörpers der Einführungsbereich voll zugänglich ist. Es ist aber auch möglich, in nicht mit Kabeln belegten Einführungen Rohre (z.B. auch einseitig geschlossen) einzumontieren, in die später die Kabel eingeführt werden können. Dabei ist das Öffnen des Kabeleinführungsbereichs nicht notwendig. Die Abdichtung erfolgt durch Schrumpfschlauch, Stopfbuchse oder Klemmhalbschale. Der Dichtungskörper kann so gestaltet werden, daß auch mehrere Trennebenen entstehen. Dadurch können mehrere Kabel ein- bzw. ausgeführt werden.

Bei der oberen Kabelmuffenschale bzw. dem Deckel der Kabelmuffe kann es sich um eine flache oder im Bereich des Spleißraumes auch um leicht gewölbte oder um einen zur Unterschale spiegelbildlichen, jedoch sonst identischen Aufbau handeln. Es ist also auch möglich, den oberen Deckel bzw. die obere Halbschale mit oder ohne Kabelausführungen vorzusehen.

Der gegenseitige Verschluß der Kabelmuffenschalen erfolgt vorzugsweise mittels Schrauben oder auch mittels konischer Klemm-Schienen, die auf konisch ausgebildete Flanschansätze aufgeschoben werden. Schnappbügel oder Einzelschnapprasterschrauben sind ebenso vorstellbar wie auch eine einseitige Übergreifung in der Längsdichtung, wobei dann nur Verschlußelemente auf der gegenüber liegenden Seite benötigt werden. Filmscharniere sind ebenfalls vorstellbar.

Die Anwendungsbereiche einer solchen Kabelmuffe sind vielseitig und erstrecken sich zum Beispiel auch auf den Einsatz bei Erd-, Schacht- und Luftkabeln.

Die Dichtungen in den Ringspalten um die Kabel herum können durch Umwickeln mit entsprechenden, an sich bekannten plastischen oder elastischem Dichtungsmaterial vorgenommen werden, wobei mit kleinen Kabeln Probleme entstehen können. Es können auch Kombinationsdichtungssysteme, zum Beispiel aus elastischem und plastischem Dichtungsmaterial verwendet werden, die sich im Dichtungsraum so ergänzen, daß auch größere Durchmesserunterschiede überbrückt werden können. Hierzu könnte der Kabeleinführungsbereich so ausgeformt sein, daß ein elastischer Block mit gegenüber der harten Halbschalenwand kleinerem Einführungsdurchmesser im Dichtungsbereich einer Kabeleinführung eingesetzt wird, so daß die Dichtung durch Pressung des Dichtungsmaterials erfolgt. Mehrfachbelegungen in einer Kabeleinführungsöffnung können mit Hilfe eines Füllstückes mit mehreren radial nach außen offenen Aussparungen realisiert werden. Eine andere Möglichkeit der Dichtung in den Kabeleinführungsbereichen ergibt sich beim Einsatz von Stopfbuchsen, die ebenfalls in der Trennebene liegen, so daß der Einsatz bei geschnittenen Kabeln erfolgen kann. Hier sollten dann vornehmlich Buchsen mit breitem Einsatzbereich bezüglich der Kabeldurchmesser verwendet werden.

Die Erfindung wird nun anhand von acht Figuren näher erläutert.
- Figur 1: zeigt die Kabelmuffe gemäß der Erfindung in Frontansicht.
- Figur 2: zeigt die Kabelmuffe nach Figur 1 im Bereich einer Kabeleinführung.
- Figur 3: zeigt die Anordnung nach Figur 2 in einem Teilschnitt von der Frontseite her gesehen.
- Figur 4: zeigt eine Kabeleinführungsöffnung mit Mehrfachbelegung.
- Figur 5: zeigt ein Füllstück zur Einlage in Kabeleinführungsöffnungen.
- Figur 6: zeigt eine Möglichkeit zum Verbinden der Muffenschalen mittels Klemmschrauben.
- Figur 7: zeigt die Verbindung der Muffenschalen mit Hilfe einer Klemmschiene.
- Figur 8: Zeigt als Einführungs- und Abdichtungselement eine Stopfbuchse.

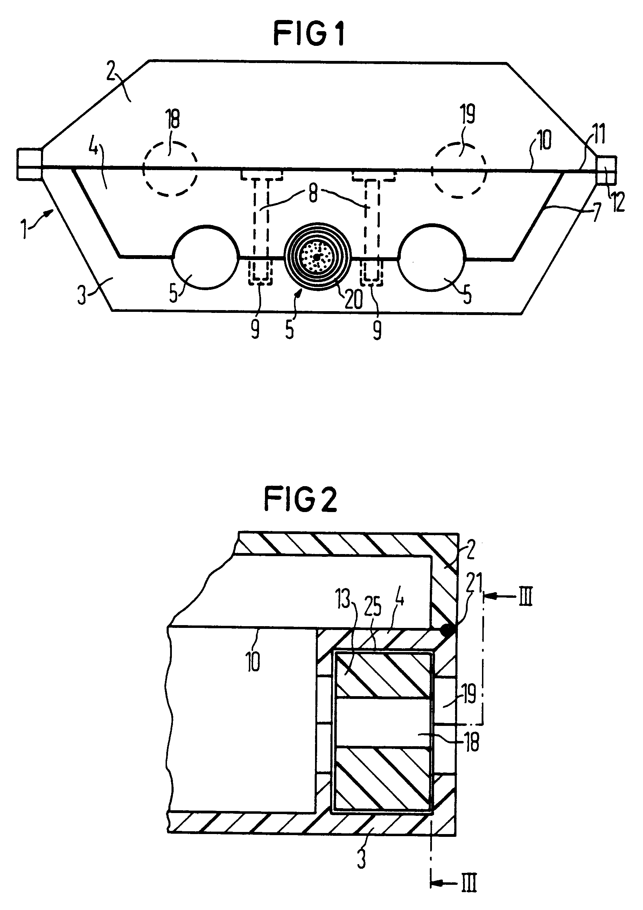

Figur 1 zeigt die Frontansicht einer Kabelmuffe 1 gemäß der Erfindung, wobei die äußere Formgebung bezüglich der Konturen beliebig abgeändert werden kann. Die Kabelmuffe 1 besteht jedoch im wesentlichen aus einer unteren Kabelmuffenschale 3 und einer oberen Kabelmuffenschale 2 bzw. einem Deckel. Die untere Kabelmuffenschale 3 ist in der Gehäuseebene 10 über ein Dichtungssystem in an sich bekannter Weise von der oberen Kabelmuffenschale 2 trennbar, wobei entlang der Ränder Verschlußelemente, zum Beispiel in Form von Flanschen 12 angeordnet sind, die mittels Schrauben oder Klemmen dichtend zusammengehalten werden. Diese Ausführung entspricht so weit im wesentlichen der bisher bekannten, längsgeteilten Kabelmuffenform aus zwei Kabelmuffenschalen, bei der jedoch die Kabeleinführungen in dieser Trennebene angeordnet wurden. Dies hat jedoch zum Nachteil, daß beim späteren Wiederöffnen der Kabelmuffe 1 auch Dichtungen in den Kabeleinführungsbereichen erneuert werden müssen. Bei der Ausführung gemäß der Erfindung wird jedoch nun ein verbesserter Weg eingeschlagen, so daß beim Wiederöffnen der Kabelmuffe 1 die Kabeleinführungsdichtungen unberührt bleiben können. Hierfür werden die Kabeleinführungen mit den entsprechenden Kabeleinführungsöffnungen 5 in eine separate, von der Gehäusetrennebene 10 unabhängige Trennebene 7 verlagert. Dies wird dadurch erreicht, daß die Frontseite einer Kabelmuffenschale 3 nochmals längsgeteilt wird, so daß ein Dichtungskörper 4 als Einsatz entsteht, wie es in der Figur 1 dargestellt ist. In dieser neuen Trennebene 7 werden dann die erforderlichen Kabeleinführungsöffnungen 5 eingebracht. Die Abdichtung zwischen dem Dichtungskörper 4 und dem angepaßten Reststück der Frontseite der Kabelmuffenschale 3 erfolgt durch Einlage einer geeigneten Dichtungsmasse und die gegenseitige Verklemmung wird mit Hilfe von Klemm- oder Schraubmitteln 8 hergestellt. Der obere Rand der Kabelmuffenschale 3 und die Oberseite des Dichtungskörpers 4 sind so aufeinander abgestimmt, daß sich eine durchgehende Trennebene 10 ergibt, in der sich das Dichtungssystem zur oberen Kabelmuffenschale 2 befindet. Zusätzlich könnten bei Bedarf auch in dieser Gehäusetrennebene 10 ebenfalls Kabeleinführungsöffnungen eingebracht werden; doch werden hier dann die Kabeleinführungsöffnungen 18 bzw. 19 beim Öffnen der Kabelmuffe 1 wie bisher zerstört. In der mittleren Kabeleinführungsöffnung 5 ist dargestellt, daß die Dichtung im Ringspalt zwischen einem Kabel mit kleinerem Durchmesser und der größeren Kabeleinführungsöffnung 5 mit mehreren Lagen aus Dichtungsband 20 eingepreßt werden kann.

Schließlich ist es auch möglich, daß auch die Frontseite der oberen Kabelmuffenschale 2 längsgeteilt wird, wenn größerer Bedarf an Kabeleinführungsöffnungen besteht. Hier werden dann dieselben Maßnahmen getroffen wie bei der unteren Kabelmuffenhalbschale 3.

Die frontseitigen Wandungen der Kabelmuffenschalen 2 und 3 können zum Beispiel auch in Längsrichtung Lamellenstruktur aufweisen, das heißt mehrere lamellenartige, dünne Wendungen sind hintereinander liegend angeordnet. Dadurch läßt sich die Dichtungswirkung verbessern.

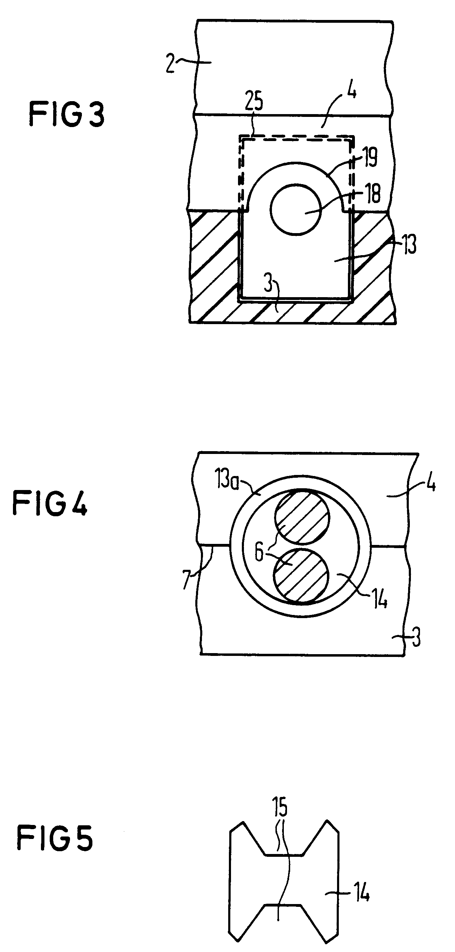

Die Figur 2 zeigt einen Kabeleinführungsbereich im Schnittbild. Hier wird als Dichtung ein elastischer oder plastischer Dichtungsblock 13 verwendet, der mit einer Kabeleinführungsöffnung 18 versehen ist, deren Durchmesser kleiner ist als die ausgeschnittene Kabeleinführungsöffnung 19 in der Frontwandung der unteren Kabelmuffenschale 3. Beim Aufziehen des Dichtungskörpers 4 wird dann der Dichtungsblock 13 dichtend in der vorgesehenen Dichtungskammer gegen die Wandungen und gegen das eingeführte Kabel verpreßt. In der Gehäusetrennebene 10 ist ein Dichtungssystem mit einer Dichtschnur 21 angeordnet, mit dem die Abdichtung zur oberen Kabelmuffenschale 2 hergestellt wird. Außerdem ist der Schnitt III-III eingezeichnet, der zur Darstellung der Figur 3 weist.

Die Figur 3 zeigt den Kabeleinführungsbereich nach dem in Figur 2 angegebenen Schnitthinweis III-III und macht deutlich, daß der Dichtungsblock 13 die Dichtkammer 25 ausfüllt. Der Durchmesser der Kabeleinführungsöffnung 19 in der Außenwandung der Kabelmuffenschale 4 ist größer als der Durchmesser der Kabeleinführungsöffnung 18 im Dichtungsblock 13, um die Verdichtung des Dichtungsblockes 13 gewährleisten zu können.

In Figur 4 wird verdeutlicht, daß in einer Kabeleinführungsöffnung auch eine Mehrfachbelegung mit Kabeln 6 möglich ist, wenn entsprechendes Dichtungsmaterial vorgesehen wird. Dies kann zum Beispiel mit plastischem Material erfolgen, das entsprechend vorgeformt werden muß; doch können auch bereits vorgeformte Füllstücke 14 mit entsprechenden Aussparungen für die Kabel eingesetzt werden. In der Kabeleinführungsöffnung der Kabelmuffenschalen 3 und 4 ist auch hier der Dichtungsblock 13a zu erkennen.

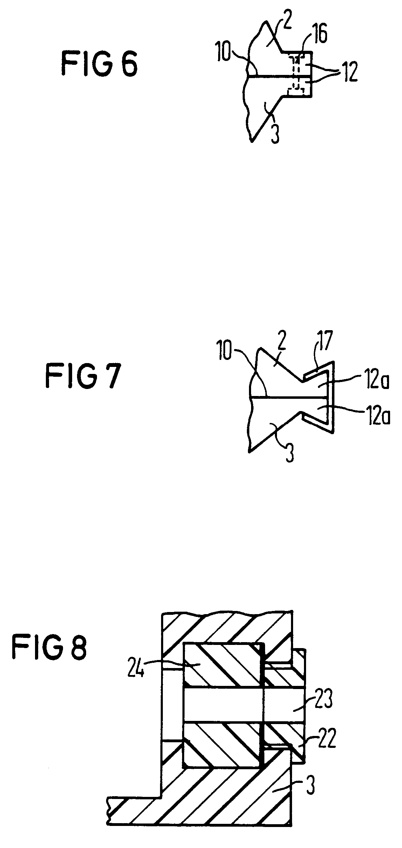

Die Figur 5 zeigt ein Füllstück 14 aus verformbarem Material, das innerhalb der Kabeleinführungsöffnung dicht anliegend verpreßt werden kann. Das Füllstück 14 weist seitliche offene Aussparungen 15 auf, in der die einzuführenden Kabel eingelegt werden. Die gezeigte Form des Füllstückes 14 zeigt nur die prinzipielle Gestaltung; selbstverständlich sind auch entsprechend abgerundete und bereits auf die Durchmesser abgestimmte Konturen möglich.

Figur 6 zeigt ein Beispiel für die seitliche Verbindung der Kabelmuffenschalen 2 und 3, die seitlich abstehende Flansche 12 aufweisen. Diese Flansche 12 werden zum Beispiel mittels Schrauben 16 zusammengepreßt und stellen über das in der Gehäusetrennebene 10 eingebrachte Dichtungssystem, das hier nicht gezeichnet ist, die erforderliche Abdichtung her.

Die Figur 7 zeigt eine andere Möglichkeit der gegenseitigen Verbindung der Kabelmuffenschalen 2 und 3. Hier sind die beiden angeformten Flansche 12a keilförmig hinterschnitten, so daß als gegenseitige Verbindung eine Klammer 17, zum Beispiel in Form einer Längsschiene, abrutschsicher aufgezogen werden kann .

Die Figur 8 vermittelt eine Abdichtung in einer Kabeleinführungsöffnung mittels einer Art an sich bekannter Stopfbuchse. Hier erfolgt die Verpressung des in der Dichtungskammer der Kabelmuffenschale 3 eingesetzten Dichtungsmaterials 24 mit Hilfe einer Preßschraube 22, die eine Kabeleinführungsöffnung 23 aufweist. Im übrigen gleichen sich die Verhältnisse zu den vorherigen Beispielen, insbesondere der Ausbildung einer zweiten Trennebene für die Kabeleinführungsöffnungen, die von der Gehäusetrennebene unabhängig sind.

## Patentansprüche

1. Kabelmuffe aus einem längsgeteilten Gehäuse mit einem Dichtungssystem in der Gehäusetrennebene und mit Kabeleinführungsbereichen in den stirnseitigen Abschlüssen der Kabelmuffenschalen (2,3), wobei eine weitere, von der Gehäusetrennebene (10) unabhängige Einführungstrennebene (7) in den Kabeleinführungsbereichen vorgesehen ist, in der die Kabeleinführungsöffnungen (5) eingebracht sind und ein angepaßter, mit dem oberen Rand der unteren Kabelmuffenschale (3) in der Gehäusetrennebene abschließenden Dichtungskörper (4) auf der Einführungstrennebene eingesetzt ist,
**dadurch gekennzeichnet**,
daß Dichtungskammern (25) zur Aufnahme eines Dichtungsblockes (13, 13a, 14) aus elastischem oder plastischem Dichtungsmaterial in den Kabeleinführungsbereichen angeordnet sind, wobei jeweils der Dichtungsblock (13, 13a, 24) Kabeleinführungsöffnungen (18) aufweist und daß die Durchmesser der Kabeleinführungsöffnungen (19) in den Wandungen der Kabelmuffenschalen größer sind als die Durchmesser der Kabeleinführungsöffnungen (18) im Dichtungsblock (13, 13a, 24).

2. Kabelmuffe nach Anspruch 1,
**dadurch gekennzeichnet**,
daß die Kabeleinführungsöffnungen (5) beim Herstellungsvorgang der Kabelmuffenschalen (2, 3) ausgespart sind.

3. Kabelmuffe nach Anspruch 1,
**dadurch gekennzeichnet**,
daß die Kabeleinführungsöffnungen (5) in den Stirnseiten der Kabelmuffenschalen (2, 3) nach Bedarf gebohrt sind.

4. Kabelmuffe nach Anspruch 1,
**dadurch gekennzeichnet**,
daß die Kabeleinführungsöffnungen (5) durch vorgesehene Ausbrechkonturen ausbrechbar sind.

5. Kabelmuffe nach einem der vorhergehenden Ansprüche,
**dadurch gekennzeichnet**,
daß der Dichtungskörper (4) trapezförmig ausgebildet ist.

6. Kabelmuffe nach einem der vorhergehenden Ansprüche,
**dadurch gekennzeichnet**,
daß die Gehäusetrennebene (10) und/oder die Einführungstrennebene mit plastischem Dichtungsmaterial belegt sind.

7. Kabelmuffe nach einem der Ansprüche 1 bis 5,
**dadurch gekennzeichnet**,
daß die Gehäusetrennebene (10) und/oder die Einführungstrennebene (7) mit elastischem Dichtungsmaterial belegt sind.

8. Kabelmuffe nach einem der vorhergehenden Ansprüche,
**dadurch gekennzeichnet**,
daß konzentrische Dichtungsringe (20) in den Kabeleinführungsöffnungen (5) angeordnet sind.

9. Kabelmuffe nach einem der vorhergehenden Ansprüche,
**dadurch gekennzeichnet**,
daß die stirnseitigen Wandungen der Kabelmuffenschalen (2, 3) und des Dichtungskörpers (4) aus hintereinander liegenden Lamellen bestehen.

10. Kabelmuffe nach einem der vorhergehenden Ansprüche,
**dadurch gekennzeichnet**,
daß ein Füllstück (14) in den Kabeleinführungsöffnungen (5), vorzugsweise mit vom äußeren Umfang her zugänglichen Aussparungen (15), einsetzbar ist.

11. Kabelmuffe nach einem der vorhergehenden Ansprüche,
**dadurch gekennzeichnet**,
daß die Kabelmuffenschalen (2, 3) seitlich abstehende Flansche (12, 12a) in Längsrichtung verlaufend aufweisen, in denen Klemmelemente (16), vorzugsweise Schraub- oder Rastelemente, eingesetzt sind.

12. Kabelmuffe nach einem der Ansprüche 1 bis 10,
**dadurch gekennzeichnet**,
daß die an den Kabelmuffenschalen (2, 3) seitlich abstehenden Flansche (12a) keilförmig hinterschnitten sind und daß eine aufschiebbare Klemmschiene (17) aufgeklemmt ist.

13. Kabelmuffe nach einem der vorhergehenden Ansprüche,
**dadurch gekennzeichnet**,
daß in den Kabeleinführungsöffnungen (5) schraubbare Druckelemente (22) nach dem Prinzip von Stopfbuchsen angeordnet sind.

14. Kabelmuffe nach einem der vorhergehenden Ansprüche,
**dadurch gekennzeichnet**,
daß in Einführungsöffnungen Dichtungseinsätze dicht eingesetzt sind, vorzugsweise durch Rastung, Klebung oder mittels Dichtungspaste.

## Claims

1. Cable sleeve comprising a longitudinally split housing having a sealing system in the housing separation plane and having cable entry areas in the end closures of the cable sleeve shells (2, 3), a further entry separation plane (7), which is independent of the housing separation plane (10), being provided in the cable entry areas, in which plane the cable entry openings (5) are incorporated, and a matched sealing body (4), which ends with the upper edge of the lower cable sleeve shell (3) in the housing separation plane, being used on the entry separation plane, characterized in that sealing chambers (25) are arranged in order to accommodate a sealing block (13, 13a, 14), which is composed of elastic or plastic sealing material, in the cable entry areas, the sealing block (13, 13a, 24) in each case having cable entry openings (18), and in that the diameters of the cable entry openings (19) in the walls of the cable sleeve shells are larger than the diameters of the cable entry openings (18) in the sealing block (13, 13a, 24).

2. Cable sleeve according to Claim 1, characterized in that the cable entry openings (5) are cut out during the production process of the cable sleeve shells (2, 3).

3. Cable sleeve according to Claim 1, characterized in that the cable entry openings (5) are drilled as required in the ends of the cable sleeve shells (2, 3).

4. Cable sleeve according to Claim 1, characterized in that the cable entry openings (5) can be knocked out by means of knock-out contours which are provided.

5. Cable sleeve according to one of the preceding claims, characterized in that the sealing body (4) is of trapezoidal design.

6. Cable sleeve according to one of the preceding claims, characterized in that the housing separation plane (10) and/or the entry separation plane are coated with plastic sealing material.

7. Cable sleeve according to one of Claims 1 to 5, characterized in that the housing separation plane (10) and/or the entry separation plane (7) are coated with elastic sealing material.

8. Cable sleeve according to one of the preceding claims, characterized in that concentric sealing rings (20) are arranged in the cable entry openings (5).

9. Cable sleeve according to one of the preceding claims, characterized in that the end walls of the cable sleeve shells (2, 3) and of the sealing body (4) are composed of laminates which are located one behind the other.

10. Cable sleeve according to one of the preceding claims, characterized in that a filler (14) can be inserted in the cable entry openings (5), preferably having cut outs (15) which are accessible from the external circumference.

11. Cable sleeve according to one of the preceding claims, characterized in that the cable sleeve shells (2, 3) have laterally projecting flanges (12, 12a) running in the longitudinal direction, in which clamping elements (16), preferably screw elements or latching elements, are inserted.

12. Cable sleeve according to one of Claims 1 to 10, characterized in that the flanges (12a) which project laterally on the cable sleeve shells (2, 3) are undercut in a wedge shape, and in that a clamping bar (17) which can be pushed on is clamped on.

13. Cable sleeve according to one of the preceding claims, characterized in that pressure elements (22), which can be screwed in the cable entry openings (5), are arranged on the basis of the principle of bungs.

14. Cable sleeve according to one of the preceding claims, characterized in that sealing inserts are inserted in a sealing manner into entry openings, preferably by means of latching, bonding or by means of sealing paste.

## Revendications

1. Manchon de câble constitué par un boîtier fendu longitudinalement, pourvu d'un système d'étanchéité situé dans le plan de séparation du boîtier, et des zones d'introduction de câble, situées dans les terminaisons frontales des coques (2,3) du manchon de câble, et dans lequel est prévu, dans les zones d'introduction du câble, un autre plan de séparation d'introduction (7), qui est indépendant du plan de séparation (10) du boîtier, et un corps d'étanchéité adapté (4), qui se termine avec le bord supérieur de la coque inférieure (3) du manchon de câble dans le plan de séparation du boîtier, est inséré dans le plan de séparation d'introduction,
caractérisé par le fait que les chambres d'étanchéité (25) servant à loger un bloc d'étanchéité (13,13a,14) formé d'un matériau d'étanchéité élastique ou plastique sont disposées dans les zones d'introduction de câble, le bloc d'étanchéité (13,13a,24) possédant respectivement des ouvertures (18) d'introduction de câble, et que les diamètres des ouvertures (19) d'introduction de câble dans les parois des coques du manchon de câble sont supérieurs au diamètre des ouvertures (18) d'introduction de câble dans le bloc d'étanchéité (13, 13a,24).

2. Manchon de câble suivant la revendication 1, caractérisé par le fait que des ouvertures (5) d'introduction de câble sont aménagées lors de l'opération de fabrication des coques (2,3) du manchon de câble.

3. Manchon de câble suivant la revendication 1, caractérisé par le fait que les ouvertures (5) d'introduction du câble sont, le cas échéant percées, dans les faces frontales des coques (2,3) du manchon de câble.

4. Manchon de câble suivant la revendication 1, caractérisé par le fait que les ouvertures (5) d'introduction du câble peuvent être formées par arrachement au moyen de contours d'arrachement prévus.

5. Manchon de câble suivant l'une des revendications précédentes, caractérisé par le fait que le corps d'étanchéité (4) est réalisé avec une forme trapézoïdale.

6. Manchon de câble suivant l'une des revendications précédentes, caractérisé par le fait que le plan de séparation (10) du boîtier et/ou le plan de séparation d'introduction sont garnis d'un matériel d'étanchéité plastique.

7. Manchon de câble suivant l'une des revendications 1 à 5, caractérisé par le fait que le plan de séparation (10) du boîtier et/ou le plan de séparation d'introduction (7) sont garnis d'un matériau d'étanchéité élastique.

8. Manchon de câble suivant l'une des revendications précédentes, caractérisé par le fait que des bagues d'étanchéité concentriques (20) sont disposées dans les ouvertures (5) d'introduction de câble.

9. Manchon de câble suivant l'une des revendications précédentes, caractérisé par le fait que les parois frontales des coques (2,3) du manchon de câble et du corps d'étanchéité (4) sont constituées par des lamelles disposées les unes derrière les autres.

10. Manchon de câble suivant l'une des revendications précédentes, caractérisé par le fait qu'un élément de remplissage (14) peut être inséré dans les ouvertures (5) d'introduction du câble, de préférence possédant des évidements (4) accessibles à partir du pourtour extérieur.

11. Manchon de câble suivant l'une des revendications précédentes, caractérisé par le fait que les coques (2,3) du manchon de câble possèdent des brides (12, 12a), qui font saillie latéralement et s'étendent dans la direction longitudinale et dans lesquelles sont insérées des éléments de serrage (16), de préférence des éléments de vissage ou d'encliquetage.

12. Manchon de câble suivant l'une des revendications 1 à 10, caractérisé par le fait que les brides (12a), qui font saillie latéralement sur les coques (2,3) du manchon de câble, sont découpées en contre-dépouille en forme de coin et qu'un rail de serrage emmanchable (17) est fixé par serrage.

13. Manchon de câble suivant l'une des revendications précédentes, caractérisé par le fait que des éléments de compression vissables (22) sont disposés selon le principe de presse-étoupes dans les ouvertures (5) d'introduction de câble.

14. Manchon de câble suivant l'une des revendications précédentes, caractérisé par le fait que des inserts d'étanchéité sont insérés de façon étanche dans les ouvertures d'insertion, de préférence par encliquetage, collage ou moyennant l'utilisation d'une pâte d'étanchéité.
